# EUROPEAN PATENT SPECIFICATION

(11) **EP 3 079 347 B1**
(45) Date of publication and mention of the grant of the patent: **20.03.2019**
(21) Application number: 16164772.2
(22) Date of filing: 11.04.2016
(51) Int. Cl.: H04N 5/225, B60R 11/00, H01R 13/6581

(54) **CAMERA FOR A MOTOR VEHICLE WITH ELECTRICALLY CONDUCTING CONTACT ELEMENT, DRIVER ASSISTANCE SYSTEM, MOTOR VEHICLE AS WELL AS METHOD**
KAMERA FÜR EIN KRAFTFAHRZEUG MIT ELEKTRISCH LEITENDEM KONTAKTELEMENT, FAHRERASSISTENZSYSTEM, KRAFTFAHRZEUG SOWIE VERFAHREN
CAMÉRA POUR UN VÉHICULE À MOTEUR AVEC ÉLÉMENT DE CONTACT ÉLECTRIQUEMENT CONDUCTEUR, SYSTÈME D'ASSISTANCE AU CONDUCTEUR, VÉHICULE AUTOMOBILE AINSI QUE PROCÉDÉ

(30) Priority: 10.04.2015 DE 102015105531
(43) Date of publication of application: 12.10.2016
(73) Proprietor: Connaught Electronics Ltd., Tuam, County Galway (IE)
(72) Inventor: Aliganga, Denver, Tuam, County Galway (IE); Estremera, Joseph G., Tuam, County Galway (IE)
(74) Representative: Jauregui Urbahn, Kristian

(56) References cited:
- WO-A1-2011/082715
- WO-A1-2013/103548
- WO-A1-2014/032976
- JP-A- 2007 022 364
- US-A1- 2009 266 606
- US-A1- 2011 025 850
- US-A1- 2011 279 675

## Description

The present invention relates to a camera for a motor vehicle including a lens housing having an electrically conducting, first area and an electrically insulating, second area, including an electrically conducting backplate and including a fixing element, by means of which the backplate and the lens housing are connected such that the backplate is in contact with the second area of the lens housing. In addition, the invention relates to a driver assistance system as well as to a motor vehicle. Finally, the present invention relates to a method for assembling a camera for a motor vehicle.

WO2011082715 discloses a known state of the art camera module having a housing made of two parts assembled by screws.

WO2013/103548 disclosing a camera module using a metal securing element to assembly the lens holder portion to the housing portion.

Presently, the interest is in particular directed to cameras for motor vehicles. Such cameras can for example be a part of a driver assistance system, by which the environmental region of the motor vehicle can be captured. The environmental region of the motor vehicle captured by the cameras can be presented to the driver for example on a corresponding display device. The electronic components of the camera usually generate electromagnetic interferences in the operation, which may influence other components of the motor vehicle.

Cameras used heretofore for example have a lens housing, on which the lens of the camera is retained. Further, circuit boards with the electronic components are disposed in this lens housing, which can generate electromagnetic interferences. For example, the lens housing can have a first area formed of an electrically conducting material. Further, the lens housing can have a second area or a corresponding coating formed of an electrically insulating material. In addition, the camera usually has a backplate formed of an electrically conductive material. In order to be able to provide sufficient shielding for the electromagnetic interferences, it is in particular provided that the lens housing and the backplate are connected to a ground terminal of the camera. The lens housing and the backplate are usually connected to each other by a corresponding fixing element, for example a screw. In order to allow electrical connection between the lens housing and the backplate, heretofore, the second area of the lens housing or the coating is removed in the contact area with the back plate. However, this entails the disadvantage that the lens housing is for example prone to corrosion in this area and additionally has reduced resistance to environmental influences or chemicals.

It is the object of the present invention to demonstrate a solution, how a camera of the initially mentioned kind can be more reliably operated in simple manner.

According to the invention, this object is solved by a camera, by a driver assistance system, by a motor vehicle as well as by a method having the features according to the respective independent claims. Advantageous implementations of the invention are the subject matter of the dependent claims, of the description and of the figures.

A camera according to the invention for a motor vehicle includes a lens housing having an electrically conducting, first area and an electrically insulating, second area. In addition, the camera includes an electrically conducting backplate. Further, the camera includes a fixing element, by means of which the backplate and the lens housing are connected such that the backplate is in contact with the second area of the lens housing. Moreover, the fixing element is electrically connected to the first area of the lens housing and the camera has an electrically conducting contact element electrically connected to the fixing element and the backplate.

The camera serves for arrangement on a motor vehicle. The camera includes a lens housing, which can have a corresponding recess, in which the lens of the camera can be attached by a corresponding lens retainer. Usually, multiple circuit boards are disposed in the lens housing, on which electronic components are disposed. These electronic components can for example be an image sensor, an image processing unit, parts of the voltage supply of the camera or the like. In the operation of the camera, the electronic components can generate electromagnetic interferences. These electromagnetic interferences are to be shielded by the housing of the camera. Hereto, it is required that the individual components of the housing are electrically conductively connected to each other, and the housing is additionally connected to a ground terminal of the camera.

The lens housing has a first area and a second area different from the first area. For example, the first area is fabricated of an electrically conductive material, for example aluminum. The second area of the lens housing can be a coating or an anodized layer, which is not electrically conductive. Therein, the second area or the coating can completely surround the first area. The backplate of the camera, which is formed of an electrically conducting material, is connected to the lens housing by a corresponding fixing element. The backplate is connected to the lens housing such that the backplate and the second area of the lens housing, thus the electrically insulating coating, are in contact with each other. Presently, the fixing element is formed such that it is electrically connected to the first area of the lens housing. The fixing element is also electrically conductively connected to the electrically conductive area of the lens housing. Moreover, the camera has an electrically conducting contact element, which electrically connects the fixing element to the backplate. Thus, the first, electrically conducting area of the lens housing is electrically connected to the fixing element and the fixing element in turn is electrically connected to the backplate. In the assembled state of the camera, the lens housing and the backplate completely enclose the at least one electronic component. Thus, the electromagnetic interference radiation generated by the at least one electrical component can be shielded by the lens housing and the backplate. Thus, the electromagnetic compatibility can be guaranteed.

Preferably, the first area is a base body of the lens housing and the second area is a coating applied to the base body. The base body of the lens housing or the first area can for example be formed of aluminum or a corresponding aluminum alloy. The second area can completely surround the base body or the first area. The second area formed of an electrically insulating material can be a corresponding coating, in particular an anodized layer. Thus, the base body or the first area can be protected from environmental influences by the second area. In addition, it is advantageous if the contact element has a first partial element electrically connected to the fixing element, and a second partial element electrically connected to the backplate. The contact element can for example have partial elements formed substantially plate-shaped. They can be electrically connected to the fixing element on a first side and to the backplate on a second side. Thus, an electrical connection between the fixing element electrically connected to the electrically conductive area of the lens housing and the backplate can be provided in simple and inexpensive manner.

In an embodiment, the camera has an electrically insulating plug housing, wherein the plug housing and the backplate are disposed on the lens housing by means of the fixing element such that the backplate is disposed between the lens housing and the plug housing. The plug housing can for example be formed of a corresponding plastic. The plug housing can have a corresponding terminal element, on which a plug or a socket can be disposed. A plug element or a socket element connected to a circuit board of the camera can be contacted via the terminal element. Therein, the plug housing, the backplate and the lens housing are connected by the fixing element such that the backplate is disposed between the lens housing and the plug housing. Thus, arrangement of the camera saving installation space can be allowed.

In a further configuration, the plug housing and the backplate each have a bore, wherein the bores are disposed aligned with each other and the fixing element is passed through the bores. The fixing element can therefore be passed through the bore of the plug housing, through the bore of the backplate and then to the first area of the lens housing. Thus, stable construction of the camera can be allowed.

In a further embodiment, the contact element has a first partial element and a second partial element, wherein the first partial element is disposed on a side of the plug housing facing away from the back plate and the second partial element is disposed on a side of the plug housing facing the backplate, and wherein the contact element has an intermediate area, which electrically connects the first and second partial elements. In other words, the contact element can enclose the plug housing at least in certain areas. The first partial element of the contact element is disposed on a top side of the plug housing or on a side of the plug housing facing away from the backplate. In this area, the first partial element of the contact element is electrically connected to the fixing element. The second partial element of the contact element is disposed on a side of the plug housing facing the backplate. The second partial element of the contact element can therefore be disposed between the plug housing and the backplate. Here, the second partial element of the contact element establishes the electrical connection to the backplate. Further, the first and the second partial element of the contact element are electrically connected to an intermediate area. Thus, the electrical connection between the fixing element and the backplate can be established.

Furthermore, it is advantageous if the contact element has a first through-opening in the first partial element and a second through-opening in the second partial element, wherein the fixing element is passed through the first through-opening, the bore of the plug housing, the second through-opening and the bore of the backplate. In other words, the contact element can have a through-opening respectively in the first and the second partial element, which are disposed aligned with the bores of the plug housing and of the backplate. In that the fixing element is passed through the through-openings of the contact element and the bores of the plug housing and of the backplate, the contact element can be reliably retained on the camera.

In a preferred embodiment, the fixing element is formed as a screw and the lens housing has a thread in the first area, into which the screw is screwed. The thread can be introduced into the lens housing after coating or applying the second area. It can also be provided that the thread is first introduced into the base body or the first area and subsequently the second area or the coating is applied to the base body. In this case, the second area or the coating can be formed such that it is removed or ablated by screwing the screw into the thread. The screw can further have a screw head, which is electrically connected to the first area of the contact element. In that the fixing element is formed as a screw, in addition, an inexpensive and reliable assembly of the camera can be ensured.

In a further configuration, the camera has at least one circuit board, wherein a ground terminal of the at least one circuit board is electrically connected to the first area of the lens housing by means of a connecting element. It can also be provided that a circuit board assembly with multiple stacked circuit boards is disposed in the lens housing. Therein, at least one of the circuit boards can have a ground terminal electrically connected to the first area of the lens housing. The connecting element can also be formed as a screw, wherein the connecting element is electrically connected to the ground terminal of the at least one circuit board on the one hand and to the first area of the lens housing on the other hand. For introducing the connecting element or the screw, the lens housing or the first area can have a corresponding thread.

Preferably, the camera comprises a motor vehicle mounting device for mounting the camera to the motor vehicle. By means of the motor vehicle mounting device, the camera can be mounted on or in the motor vehicle.

A driver assistance system according to the invention includes at least one camera according to the invention. The at least one camera in particular serves for providing image sequences or video data describing the environmental region of the motor vehicle. This video data can for example be provided on a display device of the motor vehicle. Thus, the at least one camera can serve for assisting the driver in reversing or parking. The at least one camera can also be a part of a so-called electronic rearview mirror.

A motor vehicle according to the invention includes a driver assistance system according to the invention. The motor vehicle is in particular formed as a passenger car.

A method according to the invention serves for assembling a camera for a motor vehicle. Herein, a lens housing having an electrically conducting, first area and an electrically insulating, second area, and an electrically conducting backplate are connected by means of a fixing element such that the backplate is in contact with the second area of the lens housing. Further, the fixing element is electrically connected to the first area of the lens housing and the camera has an electrically conducting contact element, which is electrically connected to the fixing element and the backplate. Preferably, for manufacturing the contact element, a semi-finished product is punched out of a basic material and the semi-finished product is correspondingly reshaped. The basic material can for example be a corresponding sheet metal, for example a copper sheet or an aluminum sheet. A semi-finished product can be punched out of this basic material, which is correspondingly reshaped or bent. Thus, a contact element can be provided in simple and inexpensive manner.

The preferred embodiments presented with respect to the camera according to the invention and the advantages thereof correspondingly apply to the driver assistance system according to the invention, to the motor vehicle according to the invention as well as to the method according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim.

With the statements of "top", "bottom", "front", "rear", "horizontal", "vertical", depth direction", "width direction", "height direction" etc., the positions and orientations given with intended use and intended arrangement of the camera and with an observer then standing in front of the device and looking in the direction of the camera are specified.

Now, the invention is explained in more detail based on preferred embodiments as well as with reference to the attached drawings.

There show:
- Fig. 1: a motor vehicle according to an embodiment of the present invention, which has a driver assistance system with four cameras;
- Fig. 2: one of the cameras in an exploded illustration;
- Fig. 3: the camera according to Fig. 2 in a sectioned side view;
- Fig. 4: the camera according to Fig. 2 in a perspective view, wherein the camera is illustrated without fixing element;
- Fig. 5: the camera according to Fig. 4, wherein the camera is illustrated with fixing elements; and
- Fig. 6: a contact element of the camera before and after bending process.

In the figures, identical and functionally identical elements are provided with the same reference characters.

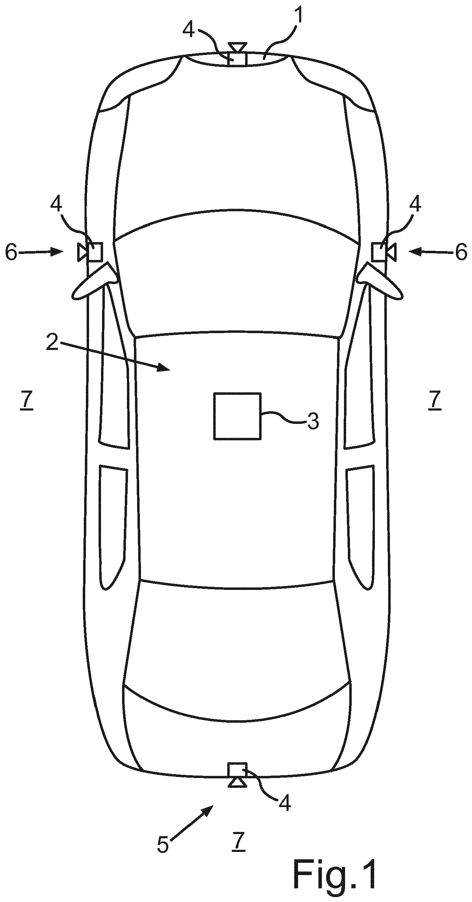

Fig. 1 shows a motor vehicle 1 according to an embodiment of the present invention in a plan view. In the present case, the motor vehicle 1 is formed as a passenger car. The motor vehicle 1 includes a driver assistance system 2. The driver assistance system 2 in turn includes a control device 3, which can for example be constituted by an electronic control unit of the motor vehicle 1. Moreover, the driver assistance system 2 includes at least one camera 4. In the present embodiment, the driver assistance system 2 includes four cameras 4, which are disposed distributed on the motor vehicle 1. Presently, one of the cameras 4 is disposed in a rear area 5 and the remaining two cameras 4 are disposed in a respective lateral area 6, in particular in an area of the wing mirrors. Presently, the number and arrangement of the cameras 4 of the driver assistance system 2 are to be understood purely exemplarily.

An environmental region 7 of the motor vehicle 1 can be captured by the cameras 4. The four cameras 4 are preferably formed identical in construction. In particular, an image sequence or video data can be provided by the cameras 4, which describes the environmental region 7. This video data can be transmitted from the cameras 4 to the control device 3. By means of the control device 3, a display device of the motor vehicle 1 not illustrated here can be driven such that the video data of the cameras 4 can be displayed to the driver. The driver assistance system 2 therefore serves for assisting the driver of the motor vehicle 1 in driving the motor vehicle 1. The driver assistance system 2 can for example be a so-called electronic rearview mirror.

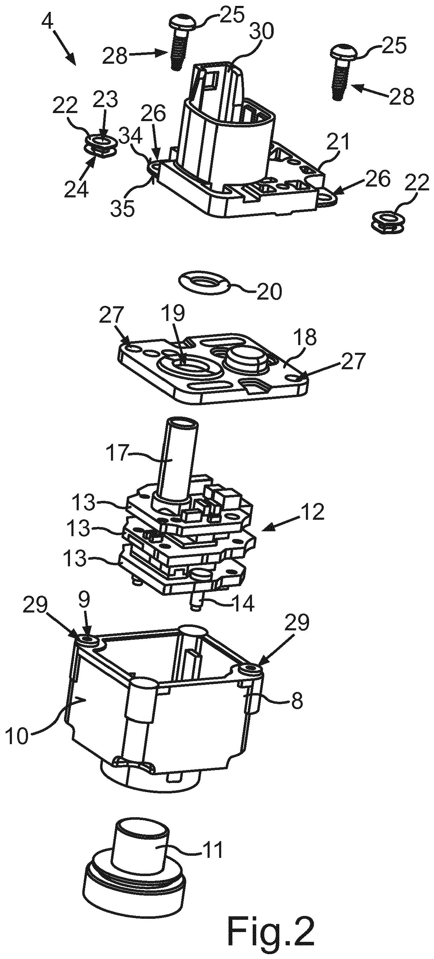

Fig. 2 shows one of the cameras 4 in an exploded illustration. Herein, it can be recognized that the camera 4 has a lens housing 8. The lens housing 8 has a first area 9 or a base body formed of an electrically conducting material. The first area 9 or the base body of the lens housing 8 can for example be made of aluminum or a corresponding aluminum alloy. Further, the lens housing 8 has a second area 10 or a coating, which completely surrounds the base body. The second area 10 or the coating can for example be an anodized layer. The second area 10 is formed of an electrically insulating material. Further, the camera 4 has a lens device 11 including a lens retainer and at least one lens. The lens device 11 can be disposed in a corresponding recess of the lens housing 8. Moreover, the camera 4 has a circuit board assembly 12. In the present embodiment, the circuit board assembly 12 has three circuit boards 13 disposed stacked one above the other.

The bottommost of the circuit boards 13 further has a connecting element 14 in the form of a screw. The connecting element 14 or the screw can be introduced into a corresponding thread 15 of the first area 9 of the lens housing 8. Further, the connecting element 14 is electrically connected to a ground terminal 16 of the circuit board 13. Thus, an electrical connection between the ground terminal 16 of the circuit board 13 and the first area 9 of the lens housing 8 can be provided. Moreover, a plug element 17 is disposed on the topmost of the circuit boards 13. The camera 4 can be connected to a corresponding connecting line of the motor vehicle via the plug element 17. Thus, the video data can for example be transmitted to the motor vehicle 1.

Further, the camera 4 includes a backplate 18 fabricated of an electrically conductive material, for example a metal. The backplate 18 has a corresponding through-bore 19, through which the plug element 17 is passed. Here, the camera 4 further has an O-ring 20, which is also passed over the plug element 17 for sealing.

Further, the camera 4 includes a plug housing 21 formed of an electrically insulating material such as for example a plastic. The plug housing 21 further has a terminal element 30, which has a corresponding recess, into which the plug element 17 protrudes. A corresponding socket or a plug of the motor vehicle 1 can be attached to the terminal element 30. Further, the camera 4 has two contact elements 22, which are formed of an electrically conducting material. Each of the contact elements 22 has a first through-opening 23 and a second through-opening 24.

Finally, the camera 4 includes two fixing elements 25 formed as screws. The fixing elements 25 are passed through the first through-opening 23 of the contact element 22, through a bore 26 in the plug housing 21, through the second through-opening 24 of the contact element 22 and through a bore 27 of the backplate 18. The fixing elements 25 or the screws have an appropriate thread 28, which is screwed into a corresponding thread 29 in the first area 9 of the lens retainer.

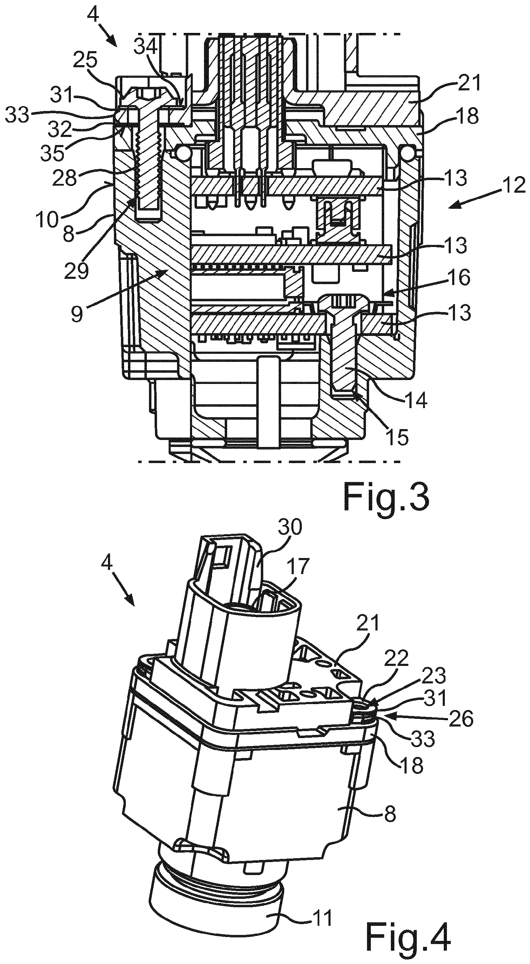

Fig. 3 shows the camera 4 according to Fig. 2 in a sectioned side view. Herein, it can be recognized that a ground terminal 16 of the bottommost circuit board 13 is electrically connected to the first area 9 of the lens housing 8 by means of the connecting element 14. Moreover, the first area 9 of the lens housing 8 is electrically connected to the fixing element 25 via the threads 28, 29. The fixing element 25 is connected to a first partial element 31 of the contact element 22 disposed on a side 33 of the plug housing 21 facing away from the backplate 18. The first partial element 31 of the contact element 22 is connected to a second partial element 32 of the contact element 22 via an intermediate area 33, which is disposed on a side 35 of the plug housing 21 facing the backplate 18. The second partial element 32 of the contact element 22 is therefore electrically connected to the backplate 18. Thus, the contact element 22 establishes the electrical connection between the backplate 18 and the first area 9 of the lens housing 8. Thus, the first area 9 of the lens housing 8, the contact element 22, the fixing element 25 and the backplate 18 are electrically connected to the ground terminal 16 of the camera 4. Thus, a reliable electromagnetic shielding can be ensured.

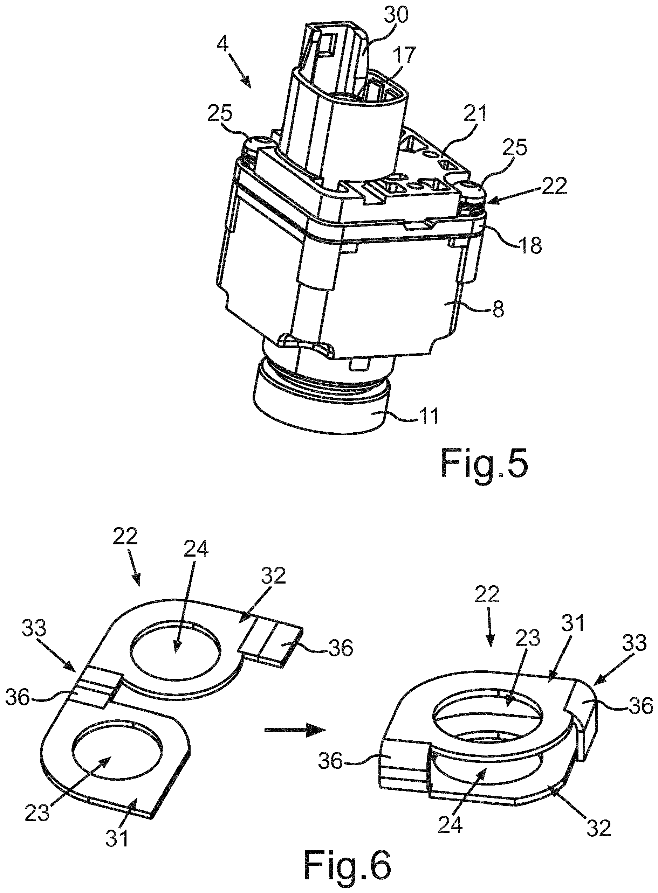

Fig. 4 shows the camera 4 in a perspective view. Presently, the camera 4 is illustrated without the fixing elements 25. Here, it can be recognized that the contact element 22 has the first through-opening 23 in the first area 31, which is disposed aligned with the bore 26 in the plug housing 21. Fig. 5 shows the camera 4 according to Fig. 4, wherein the fixing elements 25 are disposed on the camera 4.

Fig. 6 shows the contact element 22 in a perspective view. Therein, the contact element 22 is illustrated before a bending process on the left side and after a bending process on the right side. In particular, the first partial element 31 with the first through-opening 23 as well as the second partial element 32 with the second through-opening 24 can be recognized. Further, the connecting area 33 can be recognized, which electrically connects the first partial element 31 and the second partial element 32 to each other. The connecting area 33 presently includes two flap elements 36. The contact element 22 or the bent contact element 22 can then be disposed on the plug housing 21. The contact element 22 can therefore be fabricated in simple and inexpensive manner. For example, a corresponding semi-finished product can be punched out of a material, for example a sheet metal, which is then correspondingly bent to the contact element 22. In addition, a reliable electromagnetic shielding of the camera 4 can be allowed by the contact element 22.

## Claims

1. Camera (4) for a motor vehicle (1) including a lens housing (8) having an electrically conducting, first area (9) and an electrically insulating, second area (10), including an electrically conducting backplate (18) and including a fixing element (25), by means of which the backplate (18) and the lens housing (8) are connected such that the backplate (18) is in contact with the second area (10) of the lens housing (8), and the fixing element (25) is electrically connected to the first area (9) of the lens housing (8)
**characterized in that**
the camera (4) has an electrically conducting contact element (22) which is electrically connected to the fixing element (25) and the backplate (18),
the camera (4) has an electrically insulating plug housing (21), wherein the plug housing (21) and the backplate (18) are disposed on the lens housing (8) by means of the fixing element (25) such that the backplate (18) is disposed between the lens housing (8) and the plug housing (21),
the plug housing (21) and the backplate (18) each have a bore (26, 27), wherein the bores (26, 27) are disposed aligned with each other and the fixing element (25) is passed through the bores (26, 27),
the contact element (22) has a first and a second partial element (31, 32) wherein the first partial element (31) is disposed on a side (34) of the plug housing (21) facing away from the backplate (18) and the second partial element (32) is disposed on a side (35) of the plug housing (21) facing the backplate (18), and wherein the contact element (22) has an intermediate area (33) electrically connecting the first and the second partial element (31, 32).

2. Camera (4) according to claim 1,
**characterized in that**
the first area (9) is a base body of the lens housing (8) and the second area (10) is a coating applied to the base body.

3. Camera (4) according to claim 1 or 2,
**characterized in that**
the contact element (22) has a first partial element (31) electrically connected to the fixing element (25) and a second partial element (32) electrically connected to the backplate (18).

4. Camera (4) according to any one of the preceding claims,
**characterized in that**
the contact element (22) has a first through-opening (23) in the first partial element (31) and a second through-opening (24) in the second partial element (32), wherein the fixing element (25) is passed through the first through-opening (23), the bores (26) of the plug housing (21), the second through-opening (23) and the bore (27) of the backplate (18).

5. Camera (4) according to any one of the preceding claims,
**characterized in that**
the fixing element (25) is formed as a screw and the lens housing (8) has a thread (29) in the first area (9), into which the fixing element (25) is screwed.

6. Camera (4) according to any one of the preceding claims,
**characterized in that**
the camera (4) has at least one circuit board (13), wherein a ground terminal (16) of the at least one circuit board (13) is electrically connected to the first area (9) of the lens housing (8) by means of a connecting element (14).

7. Camera (4) according to any one of the preceding claims,
**characterized in that**
the camera (4) comprises a motor vehicle mounting device for mounting the camera (4) to the motor vehicle (1).

8. Driver assistance system (2) for a motor vehicle (1) with at least one camera (4) according to any one of the preceding claims.

9. Motor vehicle (1) with a driver assistance system (2) according to claim 8.

10. Method for assembling a camera (4) according to claims 1-7 for a motor vehicle (1), in which a lens housing (8) having an electrically conducting, first area (9) and an electrically insulating, second area (10) and an electrically conducting backplate (18) are connected by means of a fixing element (25) such that the backplate (18) is in contact with the second area (10) of the lens housing (8),
**characterized in that**
the fixing element (25) is electrically connected to the first area (9) of the lens housing (8) and the camera (4) has an electrically conducting contact element (22), which is electrically connected to the fixing element (25) and the backplate (18).

11. Method according to claim 10,
**characterized in that**
for producing the contact element (22), a semi-finished product is punched out of a basic material and the semi-finished product is reshaped.

## Patentansprüche

1. Kamera (4) für ein Kraftfahrzeug (1), welche ein Objektivgehäuse (8) mit einem elektrisch leitenden ersten Bereich (9) und einem elektrisch isolierenden zweiten Bereich (10) aufweist, eine elektrisch leitende Rückenplatte (18) aufweist und ein Befestigungselement (25) aufweist, durch welches die Rückenplatte (18) und das Objektivgehäuse (8) so verbunden sind, dass die Rückenplatte (18) mit dem zweiten Bereich (10) des Objektivgehäuses (8) in Kontakt steht und das Befestigungselement (25) mit dem ersten Bereich (9) des Objektivgehäuses (8) elektrisch verbunden ist,
**dadurch gekennzeichnet, dass**
die Kamera (4) ein elektrisch leitendes Kontaktelement (22) aufweist, welches mit dem Befestigungselement (25) und der Rückenplatte (18) elektrisch verbunden ist,
die Kamera (4) ein elektrisch isolierendes Steckergehäuse (21) aufweist, wobei das Steckergehäuse (21) und die Rückenplatte (18) mittels des Befestigungselements (25) so auf dem Objektivgehäuse (8) angeordnet sind, dass die Rückenplatte (18) zwischen dem Objektivgehäuse (8) und dem Steckergehäuse (21) angeordnet ist,
das Steckergehäuse (21) und die Rückenplatte (18) jeweils eine Bohrung (26, 27) aufweisen, wobei die Bohrungen (26, 27) zueinander fluchtend angeordnet sind und das Befestigungselement (25) durch die Bohrungen (26, 27) geführt ist,
das Kontaktelement (22) ein erstes und ein zweites Teilelement (31, 32) aufweist, wobei das erste Teilelement (31) auf einer von der Rückenplatte (18) abgewandten Seite (34) des Steckergehäuses (21) angeordnet ist und das zweite Teilelement (32) auf einer der Rückenplatte (18) zugewandten Seite (35) des Steckergehäuses (21) angeordnet ist, und wobei das Kontaktelement (22) einen Zwischenbereich (33) aufweist, der das erste und das zweite Teilelement (31, 32) elektrisch verbindet.

2. Kamera (4) gemäß Anspruch 1,
**dadurch gekennzeichnet, dass**
der erste Bereich (9) ein Grundkörper des Objektivgehäuses (8) ist und der zweite Bereich (10) eine auf den Grundkörper aufgebrachte Beschichtung ist.

3. Kamera (4) gemäß Anspruch 1 oder 2,
**dadurch gekennzeichnet, dass**
das Kontaktelement (22) ein erstes Teilelement (31), das mit dem Befestigungselement (25) elektrisch verbunden ist, und ein zweites Teilelement (32), das mit der Rückenplatte (18) elektrisch verbunden ist, aufweist.

4. Kamera (4) gemäß einem der vorstehenden Ansprüche,
**dadurch gekennzeichnet, dass**
das Kontaktelement (22) eine erste Durchgangsöffnung (23) im ersten Teilelement (31) und eine zweite Durchgangsöffnung (24) im zweiten Teilelement (32) aufweist, wobei das Befestigungselement (25) durch die erste Durchgangsöffnung (23), die Bohrungen (26) des Steckergehäuses (21), die zweite Durchgangsöffnung (23) und die Bohrung (27) der Rückenplatte (18) geführt ist.

5. Kamera (4) gemäß einem der vorstehenden Ansprüche,
**dadurch gekennzeichnet, dass**
das Befestigungselement (25) als eine Schraube ausgebildet ist und das Objektivgehäuse (8) ein Gewinde (29) im ersten Bereich (9) aufweist, in welches das Befestigungselement (25) eingeschraubt ist.

6. Kamera (4) gemäß einem der vorstehenden Ansprüche,
**dadurch gekennzeichnet, dass**
die Kamera (4) wenigstens eine Leiterplatte (13) aufweist, wobei ein Erdungsanschluss (16) der wenigstens einen Leiterplatte (13) mit dem ersten Bereich (9) des Objektivgehäuses (8) mittels eines Verbindungselements (14) elektrisch verbunden ist.

7. Kamera (4) gemäß einem der vorstehenden Ansprüche,
**dadurch gekennzeichnet, dass**
die Kamera (4) eine Kraftfahrzeug-Halterungsvorrichtung zur Anbringung der Kamera (4) am Kraftfahrzeug (1) umfasst.

8. Fahrerassistenzsystem (2) für ein Kraftfahrzeug (1) mit wenigstens einer Kamera (4) gemäß einem der vorstehenden Ansprüche.

9. Kraftfahrzeug (1) mit einem Fahrerassistenzsystem (2) gemäß Anspruch 8.

10. Verfahren zum Zusammenbauen einer Kamera (4) gemäß Anspruch 1-7 für ein Kraftfahrzeug (1), wobei ein Objektivgehäuse (8) mit einem elektrisch leitenden ersten Bereich (9) und einem elektrisch isolierenden zweiten Bereich (10) und eine elektrisch leitende Rückenplatte (18) mittels eines Befestigungselements (25) so verbunden werden, dass die Rückenplatte (18) mit dem zweiten Bereich (10) des Objektivgehäuses (8) in Kontakt steht,
**dadurch gekennzeichnet, dass**
das Befestigungselement (25) mit dem ersten Bereich (9) des Objektivgehäuses (8) elektrisch verbunden wird und die Kamera (4) ein elektrisch leitendes Kontaktelement (22) aufweist, welches mit dem Befestigungselement (25) und der Rückenplatte (18) elektrisch verbunden wird.

11. Verfahren gemäß Anspruch 10,
**dadurch gekennzeichnet, dass**
zur Herstellung des Kontaktelements (22) ein Halbfertigprodukt aus einem Grundmaterial ausgestanzt wird und das Halbfertigprodukt umgeformt wird.

## Revendications

1. Caméra (4) pour un véhicule à moteur (1) comprenant un boîtier d'objectif (8) ayant une première zone (9) électriquement conductrice et une seconde zone (10) électriquement isolante, comprenant une plaque arrière (18) électriquement conductrice et comprenant un élément de fixation (25) au moyen duquel la plaque arrière (18) et le boîtier d'objectif (8) sont connectés de manière à ce que la plaque arrière (18) soit en contact avec la seconde zone (10) du boîtier d'objectif (8), et l'élément de fixation (25) est connecté électriquement à la première zone (9) du boîtier d'objectif (8)
**caractérisée en ce que**
la caméra (4) dispose d'un élément de contact électriquement conducteur (22) qui est connecté électriquement à l'élément de fixation (25) et à la plaque arrière (18), la caméra (4) dispose d'un boîtier de connecteur électriquement isolant (21), où le boîtier de connecteur (21) et la plaque arrière (18) sont disposés sur le boîtier d'objectif (8) au moyen de l'élément de fixation (25) de manière à ce que la plaque arrière (18) soit disposée entre le boîtier d'objectif (8) et le boîtier de connecteur (21),
le boîtier de connecteur (21) et la plaque arrière (18) présentent chacun un alésage (26, 27), les alésages (26, 27) étant disposés alignés l'un par rapport à l'autre, et l'élément de fixation (25) est passé à travers les alésages (26, 27),
l'élément de contact (22) dispose d'un premier et d'un second éléments partiels (31, 32), le premier élément partiel (31) étant disposé sur un côté (34) du boîtier de connecteur (21) à l'opposé à la plaque arrière (18) et le second élément partiel (32) étant disposé sur un côté (35) du boîtier de connecteur (21) tourné vers la plaque arrière (18), et l'élément de contact (22) comporte une zone intermédiaire (33) connectant électriquement le premier et le second éléments partiels (31, 32).

2. Caméra (4) selon la revendication 1,
**caractérisée en ce que**
la première zone (9) est un corps de base du boîtier d'objectif (8) et la seconde zone (10) est un revêtement appliqué sur le corps de base.

3. Caméra (4) selon la revendication 1 ou la revendication 2,
**caractérisée en ce que**
l'élément de contact (22) comporte un premier élément partiel (31) connecté électriquement à l'élément de fixation (25) et un second élément partiel (32) connecté électriquement à la plaque arrière (18).

4. Caméra (4) selon l'une quelconque des revendications précédentes,
**caractérisée en ce que**
l'élément de contact (22) présente une première ouverture de passage (23) dans le premier élément partiel (31) et une seconde ouverture de passage (24) dans le second élément partiel (32), où l'élément de fixation (25) est passé à travers la première ouverture de passage (23), les alésages (26) du boîtier de connecteur (21), la seconde ouverture de passage (23) et l'alésage (27) de la plaque arrière (18).

5. Caméra (4) selon l'une quelconque des revendications précédentes,
**caractérisée en ce que**
l'élément de fixation (25) est réalisé sous la forme d'une vis et le boîtier d'objectif (8) présente un filetage (29) dans la première zone (9), dans lequel l'élément de fixation (25) est vissé.

6. Caméra (4) selon l'une quelconque des revendications précédentes,
**caractérisée en ce que**
la caméra (4) présente au moins une carte de circuit imprimé (13), où une borne de masse (16) de l'au moins une carte de circuit imprimé (13) est connectée électriquement à la première zone (9) du boîtier d'objectif (8) au moyen d'un élément de connexion (14).

7. Caméra (4) selon l'une quelconque des revendications précédentes,
**caractérisée en ce que**
la caméra (4) comprend un dispositif de montage pour véhicule à moteur permettant de monter la caméra (4) sur le véhicule à moteur (1).

8. Système d'aide à la conduite (2) pour un véhicule à moteur (1) muni d'au moins une caméra (4) selon l'une quelconque des revendications précédentes.

9. Véhicule à moteur (1) muni d'un système d'aide à la conduite (2) selon la revendication 8.

10. Procédé d'assemblage d'une caméra (4) selon les revendications 1 à 7 pour un véhicule à moteur (1), dans lequel un boîtier d'objectif (8) présentant une première zone électriquement conductrice (9) et une seconde zone électriquement isolante (10) et une plaque arrière électriquement conductrice (18) sont connectées au moyen d'un élément de fixation (25) de manière à ce que la plaque arrière (18) soit en contact avec la seconde zone (10) du boîtier d'objectif (8),
**caractérisé en ce que**
l'élément de fixation (25) est connecté électriquement à la première zone (9) du boîtier d'objectif (8), et la caméra (4) dispose d'un élément de contact électriquement conducteur (22) qui est connecté électriquement à l'élément de fixation (25) et à la plaque arrière (18).

11. Procédé selon la revendication 10,
**caractérisé en ce que**
pour la production de l'élément de contact (22), un produit semi-fini est découpé dans un matériau de base et le produit semi-fini est refaçonné.
